(19)

Europäisches
Patentamt
European
Patent Office
Office européen
des brevets

(11) **EP 1 950 252 A1**

(12) **EUROPEAN PATENT APPLICATION**
published in accordance with Art. 158(3) EPC

(43) Date of publication:
**30.07.2008 Bulletin 2008/31**

(21) Application number: **06822608.3**

(22) Date of filing: **30.10.2006**

(51) Int Cl.:
*C08L 101/00* *(2006.01)* *C08K 7/06* *(2006.01)*
*D01F 9/127* *(2006.01)*

(86) International application number:
**PCT/JP2006/321679**

(87) International publication number:
**WO 2007/052616 (10.05.2007 Gazette 2007/19)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.10.2005 JP 2005317262**

(71) Applicants:
• **Bussan Nanotech Research Institute Inc.**
**Tokyo 100-0004 (JP)**
• **MITSUI & CO., LTD.**
**Chiyoda-ku**
**Tokyo-to 100-0004 (JP)**

(72) Inventors:
• **HANDA, Koichi**
**Chiyoda-ku, Tokyo 100-0004 (JP)**

• **SUBIANTORO**
**Chiyoda-ku, Tokyo 100-0004 (JP)**
• **TSUKADA, Takayuki**
**Chiyoda-ku, Tokyo 100-0004 (JP)**
• **OKUBO, Tsuyoshi**
**Chiyoda-ku, Tokyo 100-0004 (JP)**
• **SHAN, Jiayi**
**Chiyoda-ku, Tokyo 100-0004 (JP)**
• **YAMAUCHI, Akira**
**Tokyo 100-0004 (JP)**
• **NAGASHIMA, Manabu**
**Tokyo 100-0004 (JP)**

(74) Representative: **Brochard, Pascale et al**
**Osha Liang**
**121, avenue des Champs Élysées**
**75008 Paris (FR)**

(54) **COLORED POLYMER COMPOSITION**

(57)    The disclosed is a colored polymer composition which includes carbon fibrous structures and a coloring agent in a polymer matrix, wherein the carbon fibrous structure comprises a three dimensional network of carbon fibers each having an outside diameter of 15 - 100 nm, wherein the carbon fibrous structure further comprises a granular part with which the carbon fibers are tied together in the state that the concerned carbon fibers are externally elongated therefrom, and wherein the granular part is produced in a growth process of the carbon fibers. It is the colored polymer composition which includes novel carbon fibrous structures having preferable physical properties as a filler for composite material, and of being able to improve electrical, mechanical and thermal properties of a matrix while maintaining other properties of the matrix, in a small adding amount, and which can show a color as pleases. When a white coloring agent is used as the coloring agent, the darkness in color tone of the polymer which is due to the addition of the carbon fibrous structure can be easily corrected by adding a relatively small amount of the white coloring agent as the coloring agent.

FIG. 4A

EP 1 950 252 A1

**Description**

**TECHNICAL FIELD**

This invention relates to a novel colored polymer composition. Particularly, this invention relates to a colored polymer composition which has excellent electrical, mechanical and thermal properties, and shows a color as pleases.

**BACKGROUND ART**

To date, composite preparations comprising plural materials have been developed in order to attain unique characteristics that are not found in any single material. As a composite material, glass fiber - reinforced plastic had been widely used. Subsequently, carbon fibers has been produced, and the development of carbon fiber reinforced plastics (CFRP) which use the carbon fibers as reinforcements has brought such composite materials into general use.

These composite materials have been widely used in sporting goods and so on, and have also gained much attention as light weight-, high intensity- and high elastic modulus-structural materials for aircrafts. In addition to the fiber - reinforced materials mentioned above, composite materials reinforced with fine particles have also been successfully developed. Composite materials, while generally regarded as structural materials for their structural properties such as strength and heat resistance, are increasingly being recognized as functional materials for their electrical, electronic, optical, and chemical characteristics.

As the prevalence of various electronic devices increases, problems such as malfunction of devices caused by static electricity and electromagnetic wave interference caused by noises from certain electronic components are also on the rise, thus creating an increased demand for materials that have excellent functional characteristics such as conductivities and damping abilities.

Traditional conductive polymer materials currently in wide use are made by blending highly conductive fillers with low conductive polymers. In suchmaterials, metallic fibers, metallic powders, carbon black, carbon fibers and other similar materials are generally used as conductive fillers. However, when using metallic fibers and metallic powders as the conductive filler, the materials thus obtained have poor corrosion resistance and mechanical strength. When using carbon fibers as the conductive filler, although a predetermined strength and elastic modulus may be obtained by adding relatively large amounts of the filler, electrical conductivity generally cannot be greatly enhanced by this approach. If one attempts to attain a predetermined conductivity by adding a large amount of filler, one would invariably degrade the intrinsic properties of the original polymer material.

Further, when the carbon fibers are added at such a large amount, the composite material thus obtained inevitably shows deep black color. Thus, upon developing products which can highly satisfy users' tastes, it is further required to paint the surfaces of the products, and which leads a hike in prices of products.

Incidentally, in recent years, fine carbon fibers such as carbon nano structures, exemplified by the so-called carbon nanotubes (hereinafter, referred to also as "CNT"), have become a focus of attention.

The graphite layers that make up the carbon nano structures are materials normally comprised of regular arrays of six-membered ring carbon networks, which bring about unique electrical properties, as well as chemical, mechanical, and thermal stabilities. As long as such urtrathin carbon fibers can retain such properties upon blending and dispersion in a solid material, including various resins, ceramics, metals, etc., or in liquid materials, including fuels, lubricant agents, etc., their usefulness as additives for improving material properties can be expected.

On the other hand, however, such fine carbon fibers unfortunately show an aggregate state even just after their synthesis. When these aggregates are used as-is, the fine carbon fibers would be poorly dispersed, and thus the product obtained would not benefit from the desired properties of the nano structures. Accordingly, given a desired property such as electric conductivity for a matrix such as a resin, it is necessary that the fine carbon fibers would be added in a large amount.

Patent Literature 1 disclose a conductive polymer composition which includes porous fine carbon fibers of 0.01 - < 2 % by weight, and conductive white powder of 2.5 - 40 % by weight, based on the total weight of the composition. Incidentally, the descriptions of the related parts in Patent Literature 1 are incorporated herein by their references.

Although the conductive polymer composition described in Patent Literature 1 can escape from the blackening problem of the polymer composition by virtue of the concurrent use of conductive white powder and fine carbon fibers, the fine carbon fibers can not contribute substantially to improvements in conductivity. Because, the fine carbon fibers are poorly dispersed in the polymer matrix as described above. In addition, since the fine carbon fibers exist in their aggregated form in the polymer matrix even when they are added at a relatively small amount, black spots as large as visible size are produced on the obtained product, and thus, the color tone, hue, of the resin is forced to change. In order to dispel this point, it is necessary to add a relatively large amount of conductive white powder. Thus, with respect to the improvement of the conductivity, the polymer composition can not take fully advantage of using the fine carbon fibers, and it substantially depends on the conductive white powder which is inefficient in the improvement of the conductivity.

Further, to use a large amount of the conductive white powder leads the polymer composition into lowering of its mechanical strength.

[Patent Literature 1] U. S. Patent No. 6182480

## DISCROSURE OF THE INVENTION

### PROBLEMS TO BE SOLVED BY THIS INVENTION

Therefore, this invention aims to provide a novel colored polymer composition which includes novel carbon fibrous structures having preferable physical properties as a filler for composite material, and of being able to improve electrical, mechanical and thermal properties of a matrix while maintaining other properties of the matrix, in a small adding amount, and which can show a color as pleases.

### MEANS FOR SOLVING THE PROBLEMS

As a result of our diligent study for solving the above problems, we, the inventors, have found that, in order to give adequate improvement in properties even in a small adding amount to the organic polymer, the effective things are to adapt carbon fibers having a diameter as small as possible; to make an sparse structure of the carbon fibers where the fibers are mutually combined tightly so that the fibers do not behave individually and which sustains their sparse state in the organic polymer; and to adapt as the carbon fibers per se ones which are designed to have a minimum amount of defects. Further, we have found that, when such structures of the carbon fibers are used, they can be dispersed uniformly and finely throughout the polymer matrix with little influence on the color of the polymer. Finally, we have accomplished the present invention.

The present invention to solve the above mentioned problems is, therefore, a colored polymer composition which includes carbon fibrous structures and a coloring agent in a polymer matrix, wherein the carbon fibrous structure comprises a three dimensional network of carbon fibers each having an outside diameter of 15 - 100 nm, wherein the carbon fibrous structure further comprises a granular part with which the carbon fibers are tied together in the state that the concerned carbon fibers are externally elongated therefrom, and wherein the granular part is produced in a growth process of the carbon fibers.

The present invention also provides the above mentioned colored polymer composition, wherein the coloring agent is a white coloring agent.

The present invention further provides the above mentioned colored polymer composition, wherein as the coloring agent a white coloring agent and an other color's coloring agent are contained.

The present invention also provides the above mentioned colored polymer composition, wherein the carbon fibrous structures and the white coloring agent are contained at a rate of 0.01 - 3 % by weight, and at a rate of 10 - 60 % by weight, respectively, based on the total weight of the polymer composition.

Further, the present invention provides the above mentioned colored polymer composition, wherein the carbon fibrous structure have an area-based circle-equivalent mean diameter of 50 - 100 $\mu$m.

Furthermore, the present invention provides the above mentioned colored polymer composition, wherein the carbon fibrous structures have a bulk density of 0. 0001 - 0.05g/cm$^3$.

Still further, the present invention provides the above mentioned colored polymer composition, wherein the carbon fibrous structures may have an $I_D/I_G$ ratio determined by Raman spectroscopy of not more than 0.2.

Further, the present invention also provides the above mentioned colored polymer composition, wherein the carbon fibrous structures are produced using as carbon sources of at least two carbon compounds, which have mutually different decomposition temperatures.

### EFFECT OF THE INVENTION

According to the present invention, with respect to synthetic fiber which comprises an organic polymer, the carbon fibrous structure which is added to the organic polymer is one comprising carbon fibers of a ultrathin diameter which are configured three dimensionally, and are bound tightly together by a granular part produced in a growth process of the carbon fibers so that the concerned carbon fibers are externally elongated from the granular part. Thus, the carbon fibrous structures can disperse promptly into the polymer matrix even at a small additive amount, while they maintain such a bulky structure. As a result, with respect to the electrical conductivity, it is possible to obtain good electric conductive paths throughout the polymer matrix, and thus to improve the electrical conductivity adequately. With respect to the mechanical properties and thermal properties, improvements can be expected in analogous fashions, since the fine carbon fibers as fillers are distributed evenly over the organic polymer. Furthermore, since the carbon fiber structures are dispersed uniformly and finely throughout the polymer matrix, they exert little influence on the color of the polymer.

Thus, the polymer composition can be made into the one having any color to be intended as pleasures by adding an appropriate coloring agent. Further, by adding a relatively small amount of white coloring agent, the color tone, i.e., darkness of the composition can be easily corrected. Furthermore, when adding an appropriate nonwhite coloring agent as pleases in conjunction with a white coloring agent, it is possible to obtain the composition of showing more preferable hue, color tone intended. Therefore, a polymer composition which is useful as a functional material which excels in, for instance, electrical conductivity, radio waves shielding capability, thermal conductivity, etc., or as a structural material which has a high strength can be provided according to the present invention.

**BRIEF DESCRIPTION OF THE DRAWINGS**

[Fig. 1] is a scanning electron micrograph (SEM photo) of an intermediate for the carbon fibrous structure which is used for the colored polymer composition according to the present invention.

[Fig. 2] is a transmission electron micrograph (TEM photo) of an intermediate for the carbon fibrous structure which is used for the colored polymer composition according to the present invention.

[Fig. 3] is a scanning electron micrograph (SEM photo) of a colored polymer composition which is used for the synthetic fiber according to the present invention.

[Fig. 4A] and [Fig. 4B] are transmission electron micrographs (TEM) of carbon fibrous structures which are used for the colored polymer composition according to the present invention.

[Fig. 5] is a scanning electron micrograph (SEM photo) of a carbon fibrous structure which is used for the colored polymer composition according to the present invention.

[Fig. 6] is an X-ray diffraction chart of a carbon fibrous structure which is used for the colored polymer composition according to the present invention and an intermediate thereof.

[Fig. 7] is Raman spectra of a carbon fibrous structure which is used for the colored polymer composition according to the present invention and an intermediate thereof

[Fig. 8] is a schematic diagram which illustrates a generation furnace used for manufacturing the carbon fibrous structures in an example of the present invention.

**EXPLANATION OF NUMERALS**

1    Generation furnace
2    Inlet nozzle
3    Collision member
4    Raw material mixture gas supply port
a    Inner diameter of inlet nozzle
b    Inner diameter of generation furnace
c    Inner diameter of Collision member
d    Distance from upper end of generation furnace to raw material mixture gas supply port
e    Distance from raw material mixture gas supply port to lower end of collision member
f    Distance from raw material mixture gas supply port to lower end of generation furnace

**BEST MODE FOR CARRYING OUT THE INVENTION**

Now, the present invention will be described in detail with reference to some embodiments.
The colored polymer composition according to this invention is characterized in that carbon fibrous structures each having a specific structure like a three dimensional network as mentioned later and a coloring agent are contained in a polymer matrix.

<u><Polymer matrix></u>

As the polymer matrix into which the carbon fibrous structures and the coloring agent(s) as described later in detail are dispersed in the colored polymer composition according to the present invention, various known polymers are usable without any particular limitations. For example, various thermoplastic resins such as polypropylene, polyethylene, polystyrene, polyvinyl chloride, polyacetal, polyethylene terephthalate, polycarbonate, polyvinyl acetate, polyamide, polyamide imide, polyether imide, polyether ether ketone, polyvinyl alcohol, poly phenylene ether, poly(meth)acrylate, and liquid crystal polymer; and various thermosetting resins such as epoxy resin, vinyl ester resin, phenol resin, unsaturated polyester resin, furan resins, imide resin, urethane resin, melamine resin, silicone resin and urea resin; as well as various rubbers or elastomers such as natural rubber, styrene butadiene rubber (SBR), butadiene rubber (BR), polyisoprene rubber (IR), ethylene-propylene rubber (EPDM), nitrile rubber (NBR), polychloroprene rubber (CR), isobutylene isoprene rubber (IIR),polyurethane rubber,silicone rubber,fluorine rubber, acrylic rubber (ACM), epichlorohydrin rubber, ethylene acrylic rubber, norbornene rubber and thermoplastic elastomer are enumerated. Further, as the polymer matrix, natural resins or derivatives thereof, photosensitive resins, electron beam curing resins and otherwise may be involved broadly. Incidentally, the word "polymer matrix" used herein is intended involving not only compounds in polymerized state but also compositions in uncured state such as monomer, oligomer, prepolymer as seen in the thermosetting resin compositions and rubber compositions.

Furthermore, the colored polymer composition according to the present invention may be in various forms of composition, such as adhesive, fibers, paint, ink, and etc.

That is, for example, the colored polymer composition may be an adhesive agent such as epoxy type adhesive, acrylic type adhesive, urethane type adhesive, phenol type adhesive, polyester type adhesive, polyvinyl chloride type adhesive, urea type adhesive, melamine type adhesive, olefin type adhesive, acetic acid vinyl type adhesive, hotmelt type adhesive, cyano acrylate type adhesive, rubber type adhesive, cellulose type adhesive, etc. ; fibers such as acrylic fibers, acetate fibers, aramid fiber, nylon fibers, novoloid fibers, cellulose fibers, viscose rayon fibers, vinylidene fibers, vinylon fibers, fluorine fibers, polyacetal fibers, polyurethane fibers, polyester fibers, polyethylene fibers, polyvinyl chloride fibers, polypropylene fibers, etc.; or a paint such as phenol resin type, alkyd type, epoxy type, acrylic resin type, unsaturated polyester type, polyurethane type, silicon type, fluorine resin type, synthetic resin emulsion type, etc.

(Carbon fibrous structure)

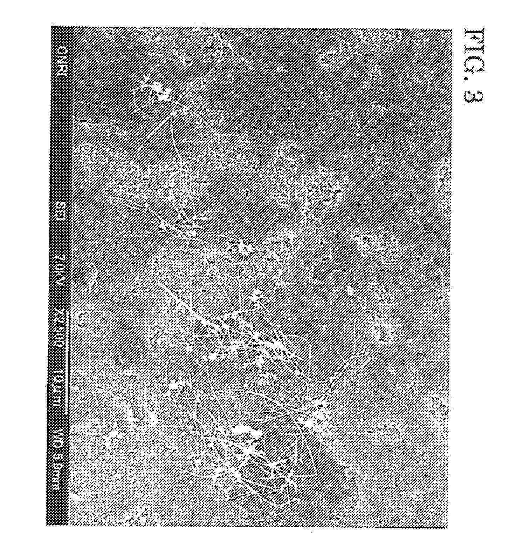

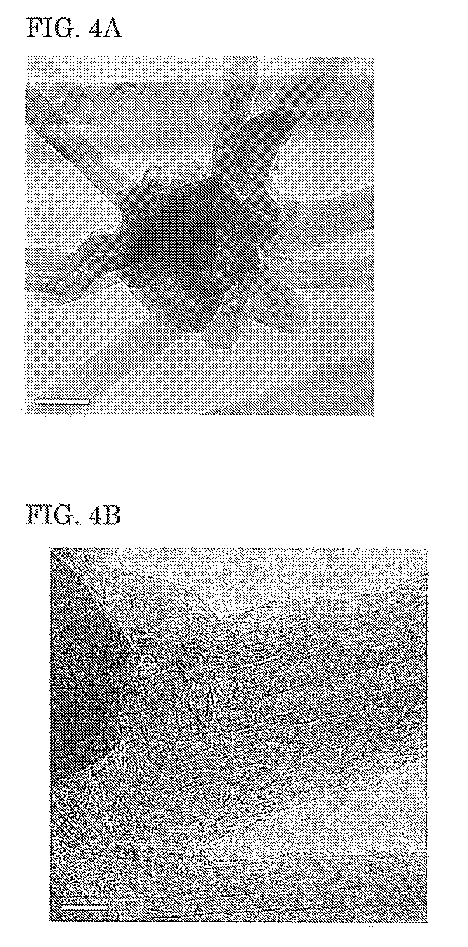

Next, each carbon fibrous structure to be used in the present invention is, as shown in SEM photo of Fig. 3 and TEM photos of Fig. 4A and 4B, composed of a thee-dimensionally network of carbon fibers each having an outside diameter of 15 - 100 nm, and a granular part with which the carbon fibers are bound together so that the concerned carbon fibers elongate outwardly from the granular part.

The reason for restricting the outside diameter of the carbon fibers which constitutes the carbon fibrous structure to a range of 15 nm to 100 nm is because when the outside diameter is less than 15 nm, the cross-sections of the carbon fibers do not have polygonal figures as described later. According to physical properties of the carbon fiber, the smaller the diameter of a fiber, the greater the number of carbon fibers will be for the same weight and/or the longer the length in the axial direction of the carbon fiber. This property would be followed by an enhanced electric conductivity. Thus, carbon fibrous structures having an outside diameter exceeding 100 nm are not preferred for use as filler for adding into the matrix such as resin. Particularly, it is more desirable for the outside diameter of the carbon fibers to be in the range of 20 - 70 nm. Carbon fibers that have a diameter within the preferable range and whose tubular graphene sheets are layered one by one in the direction that is orthogonal to the fiber axis, i.e., being of a multilayer type, can enjoy a high flexural rigidity and ample elasticity. In other words, such fibers would have a property of being easy to restore their original shape after undergoing any deformation. Therefore, even if the carbon fibrous structures have been compressed prior to being added into the organic polymer, they tend to take a sparse structure in the matrix such as resin.

Incidentally, when annealing at a temperature of not less than 2400°C, the spacing between the layered graphene sheets becomes lesser and the true density of the carbon fiber is increased from 1. 89 g/cm$^3$ to 2.1 g/cm$^3$, and the cross sections of the carbon fiber perpendicular to the axis of carbon fiber come to show polygonal figures. As a result, the carbon fibers having such constitution become denser and have fewer defects in both the stacking direction and the surface direction of the graphene sheets that make up the carbon fiber, and thus their flexural rigidity (EI) can be enhanced.

Additionally, it is preferable that the outside diameter of the fine carbon fiber undergoes a change along the axial direction of the fiber. In the case that the outside diameter of the carbon fiber is not constant, but changed along the axial direction of the fiber, it would be expected that some anchor effect may be provided to the carbon fiber in the matrix such as resin, and thus the migration of the carbon fiber in the organic polymer can be restrained, leading to improved dispersion stability.

Then, in the carbon fibrous structure used in the present invention, fine carbon fibers having a predetermined outside diameter and being configured three dimensionally are bound together by a granular part produced in a growth process of the carbon fibers so that the carbon fibers are elongated outwardly from the granular part. Since multiple carbon fibers are not only entangled each other, but tightly bound together in the granular part, the carbon fibers will not disperse as single fibers, but will be dispersed as intact bulky carbon fibrous structures when added to the matrix such as resin. Since the fine carbon fibers are bound together by a granular part produced in the growth process of the carbon fibers in the carbon fibrous structure to be used in the present invention, the carbon fibrous structure itself can enjoy superior properties such as electric property. For instance, when determining electrical resistance under a certain pressed density, the carbon fibrous structure to be used in the present invention shows an extremely low resistivity, as compared with that of a simple aggregate of the fine carbon fibers and that of the carbon fibrous structures in which the fine carbon fibers are fixed at the contacting points with a carbonaceous material or carbonized substance therefrom after the synthesis of the carbon fibers. Thus, when the carbon fibrous structures added and distributed in an organic polymer, they can form good conductive paths within the matrix.

Since the granular part is produced in the growth process of the carbon fibers as mentioned above, the carbon - carbon bonds in the granular part are well developed. Further, the granular part appears to include mixed state of $sp^2$- and $sp^3$- bonds, although it is not clear accurately. After the synthesis process (in the "intermediate" or "first intermediate" defined hereinafter), the granular part and the fibrous parts are continuous mutually because of a structure comprising patch-like sheets of carbon atoms laminated together. Further, after the high temperature treatment, at least a part of graphene layers constituting the granular part is continued on graphene layers constituting the fine carbon fibers elongated outwardly from the granular part, as shown in Figs. 4A and 4B. In the carbon fibrous structure according to the present invention, as symbolized by such a fact that the graphene layers constituting the granular part is continued on the graphene layers constituting the fine carbon fibers, the granular part and the fine carbon fibers are bound together (at least in a part) by carbon crystalline structural bonds. Thus, strong couplings between the granular part and each fine carbon fiber are produced.

With respect to the carbon fibers, the condition of being "extended outwardly" from the granular part used herein means principally that the carbon fibers and granular part are linked together by carbon crystalline structural bonds as mentioned above, but does not means that they are apparently combined together by any additional binding agent (involving carbonaceous ones).

As traces of the fact that the granular part is produced in the growth process of the carbon fibers as mentioned above, the granular part has at least one catalyst particle or void therein, the void being formed due to the volatilization and elimination of the catalyst particle during the heating process after the generation process. The void (or catalyst particle) is essentially independent from hollow parts which are formed in individual fine carbon fibers which are extended outwardly from the granular part (although, a few voids which happened to be associated with the hollow part may be observed) .

Although the number of the catalyst particles or voids is not particularly limited, it may be about 1 - 1000 a granular particle, more preferably, about 3 - 500 a granular particle. When the granular part is formed under the presence of catalyst particles the number of which is within the range mentioned above, the granular part formed can have a desirable size as mentioned later.

The per-unit size of the catalyst particle or void existing in the granular particle may be, for example, 1 - 100 nm, preferably, 2-40 nm, and more preferably, 3-15 nm.

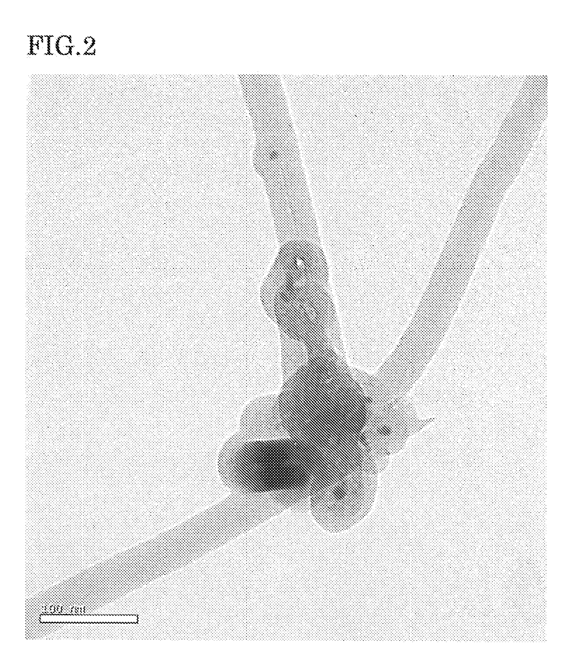

Furthermore, it is preferable that the diameter of the granular part is larger than the outside diameter of the carbon fibers as shown in Fig.2, although it is not specifically limited thereto. Concretely, for example, the diameter of granular part is 1.3 - 250 times larger than the outside diameter of the carbon fibers, preferably 1.5 - 100 times, and more preferably, 2.0 - 25 times larger, on average. When the granular part, which is the binding site of the carbon fibers, has a much larger particle diameter, that is, 1.3 times or more larger than the outer diameter of the carbon fibers, the carbon fibers that are elongated outwardly from the granular part have stronger binding force, and thus, even when the carbon fibrous structures are exposed to a relatively high shear stress during combining with the matrix such as resin, they can be dispersed as maintaining its three-dimensional carbon fibrous structures into the matrix. When the granular part has an extremely larger particle diameter, that is, exceeding 250 times of the outer diameter of the carbon fibers, the undesirable possibility that the fibrous characteristics of the carbon fibrous structure are lost will arise. Therefore, the carbon fibrous structure will not be suitable for an additive or compounding agent to various matrixes, and thus it is not desirable. The "particle diameter of the granular part" used herein is the value which is measured by assuming that the granular part, which is the binding site for the mutual carbon fibers, is one spherical particle.

Although the concrete value for the particle diameter of the granular part will be depended on the size of the carbon fibrous structure and the outer diameters of the fine carbon fibers in the carbon fibrous structure, for example, it may be 20 - 5000 nm, more preferably, 25 - 2000 nm, and most preferably, 30 - 500 nm, on average.

Furthermore, the granular part may be roughly globular in shape because the part is produced in the growth process of the carbon fibers as mentioned above. On average, the degree of roundness thereof may lay in the range of from 0.2 to <1, preferably, 0.5 to 0.99, and more preferably, 0.7 to 0.98.

Additionally, the binding of the carbon fibers in the granular part is very tight as compared with, for example, that in the structure in which mutual contacting points among the carbon fibers are fixed with carbonaceous material or carbonized substance therefrom. It is also because the granular part is produced in the growth process of the carbon fibers as mentioned above. Even under such a condition as to bring about breakages in the carbon fibers of the carbon fibrous structure, the granular part (the binding site) is maintained stably. Specifically, for example, when the carbon fibrous structures are dispersed in a liquid medium and then subjected to ultrasonic treatment with a selected wavelength and a constant power under a load condition by which the average length of the carbon fibers is reduced to about half of its initial value as shown in the Examples described later, the changing rate in the mean diameter of the granular parts is not more than 10%, preferably, not more than 5%, thus, the granular parts, i.e., the binding sites of fibers are maintained stably.

In carbon fibrous structures to be used in the present invention, it is preferable that the carbon fibrous structure has an area-based circle-equivalent mean diameter of 50 - 100 μm, and more preferably, 60 - 90 μm. The "area-based circle-equivalent mean diameter" used herein is the value which is determined by taking a picture of the outside shapes of the carbon fibrous structures with a suitable electron microscope, etc., tracing the contours of the respective carbon fibrous structures in the obtained picture using a suitable image analysis software, e.g., WinRoof™ (Mitani Corp.), and measuring the area within each individual contour, calculating the circle-equivalent mean diameter of each individual carbon fibrous structure, and then, averaging the calculated data.

Although it is not to be applied in all cases because the circle-equivalent mean diameter may be influenced by the kind of the polymer matrix to be compounded with the carbon fibrous materials, the circle-equivalent mean diameter may become a factor by which the maximum length of a carbon fibrous structure upon combining with the matrix is determined. In general, when the circle-equivalent mean diameter is not more than 50 μm, the electrical conductivity of the obtained synthetic fiber may not be expected to reach a sufficient level, while when it exceeds 100 μm, an undesirable increase in viscosity may be expected to happen upon kneading of the carbon fibrous structures in the matrix. The increase in viscosity may be followed by failure of dispersion of the carbon fibrous structures into the matrix, or inferiority of moldability.

As mentioned above, the carbon fibrous structure according to the present invention has the configuration where the fine carbon fibers existing in three dimensional network state are bound together by the granular part (s) so that the carbon fibers are externally elongated from the granular part(s). When two or more granular parts are present in a carbon fibrous structure, wherein each granular part binds the fibers so as to form the three dimensional network, the mean distance between adjacent granular parts may be, for example, 0.5 - 300 μm, preferably, 0.5 - 100 μm, and more preferably, 1-50 μm. The distance between adjacent granular parts used herein is determined by measuring distance from the center of a granular part to the center of another granular part which is adjacent the former granular part. When the mean distance between the granular parts is less than 0.5 μm, a configuration where the carbon fibers form an inadequately developed three dimensional network may be obtained. Therefore, it may become difficult to form good electrically conductive paths when the carbon fiber structures each having such an inadequately developed three dimensional network are added and dispersed to the matrix. Meanwhile, when the mean distance exceeds 300 μm, an undesirable increase in viscosity may be expected to happen upon adding and dispersing the carbon fibrous structures in the matrix. The increase in viscosity may result in an inferior dispersibility of the carbon fibrous structures to the matrix.

Furthermore, the carbon fibrous structure to be used in the present invention may exhibit a bulky, loose form in which the carbon fibers are sparsely dispersed, because the carbon fibrous structure is comprised of carbon fibers that are configured as a three dimensional network and are bound together by a granular part so that the carbon fibers are elongated outwardly from the granular part as mentioned above. It is desirable that the bulk density thereof is in the range of 0.0001 - 0.05 g/cm$^3$, more preferably, 0.001 - 0.02 g/cm$^3$. When the bulk density exceeds 0.05 g/cm$^3$, it would become difficult to improve the physical properties of the polymer matrix with a small dosage.

Furthermore, a carbon fibrous structure to be used in the present invention can enjoy good electric properties in itself, since the carbon fibers configured as a three dimensional network in the structure are bound together by a granular part produced in the growth process of the carbon fibers as mentioned above. For instance, it is desirable that a carbon fibrous structure to be used in the present invention has a powder electric resistance determined under a certain pressed density, 0.8 g/cm$^3$, of not more than 0.02 Ω· cm, more preferably, 0.001 to 0.010 Ω· cm. If the particle's resistance exceeds 0.02 Ω· cm, it may become difficult to form good electrically conductive paths when the structures are added to the matrix such as resin.

In order to enhance the strength and electric conductivity of the carbon fibrous structure used in the present invention, it is desirable that the graphene sheets that make up the carbon fibers have a small number of defects, and more specifically, for example, the $I_D/I_G$ ratio of the carbon fiber determined by Raman spectroscopy is not more than 0.2, more preferably, not more than 0.1. Incidentally, in Raman spectroscopic analysis, with respect to a large single crystal graphite, only the peak (G band) at 1580 cm$^{-1}$ appears. When the crystals are of finite ultrafine sizes or have any lattice defects, the peak (D band) at 1360 cm$^{-1}$ can appear. Therefore, when the intensity ratio (R=$I_{1360}/I_{1580}=I_D/I_G$) of the D band and the G band is below the selected range as mentioned above, it is possible to say that there is little defect in graphene sheets.

Furthermore, it is desirable that the carbon fibrous structure to be used in the present invention has a combustion initiation temperature in air of not less than 750 °C, preferably, 800 °C - 900 °C. Such a high thermal stability would be brought about by the above mentioned facts that it has little defects and that the carbon fibers have a predetermined outside diameter.

A carbon fibrous structure having the above described, desirable configuration may be prepared as follows, although it is not limited thereto.

Basically, an organic compound such as a hydrocarbon is chemical thermally decomposed through the CVD process in the presence of ultrafine particles of a transition metal as a catalyst in order to obtain a fibrous structure (hereinafter referred to as an "intermediate"), and then the intermediate thus obtained undergoes a high temperature heating treatment.

As a raw material organic compound, hydrocarbons such as benzene, toluene, xylene; carbon monoxide (CO); and alcohols such as ethanol may be used. It is preferable, but not limited, to use as carbon sources at least two carbon compounds which have different decomposition temperatures. Incidentally, the words "at least two carbon compounds" used herein not only include two or more kinds of raw materials, but also include one kind of raw material that can undergo a reaction, such as hydrodealkylation of toluene or xylene, during the course of synthesis of the fibrous structure such that in the subsequent thermal decomposition procedure it can function as at least two kinds of carbon compounds having different decomposition temperatures.

When as the carbon sources at least two kinds of carbon compounds are provided in the thermal decomposition reaction system, the decomposition temperatures of individual carbon compounds may be varied not only by the kinds of the carbon compounds, but also by the gas partial pressures of individual carbon compounds, or molar ratio between the compounds. Therefore, as the carbon compounds, a relatively large number of combinations can be used by adjusting the composition ratio of two or more carbon compounds in the raw gas.

For example, the carbon fibrous structure to be used in the present invention can be prepared by using two or more carbon compounds in combination, while adjusting the gas partial pressures of the carbon compounds so that each compound performs mutually different decomposition temperature within a selected thermal decomposition reaction temperature range, and/or adjusting the residence time for the carbon compounds in the selected temperature region, wherein the carbon compounds to be selected are selected from the group consisting of alkanes or cycloalkanes such as methane, ethane, propanes, butanes, pentanes, hexanes, heptane, cyclopropane, cycrohexane, particularly, alkanes having 1 -7 carbon atoms; alkenes or cycloolefin such as ethylene, propylene, butylenes, pentenes, heptenes, cyclopentene, particularly, alkenes having 1 - 7 carbon atoms; alkynes such as acetylene, propyne, particularly, alkynes having 1 - 7 carbon atoms; aromatic or heteroaromatic hydrocarbons such as benzene, toluene, styrene, xylene, naphthalene, methyl naphtalene, indene, phenanthrene, particularly, aromatic or heteroaromatic hydorocarbons having 6 -18 carbon atoms; alcohols such as methanol, ethanol, particularly, alcohols having 1 -7 carbon atoms; and other carbon compounds involving such as carbon monoxide, ketones, ethers. Further, to optimize the mixing ratio can contribute to the efficiency of the preparation.

When a combination of methane and benzene is utilized among such combinations of two or more carbon compounds, it is desirable that the molar ratio of methane/benzene is >1 - 600, preferably, 1.1 - 200, and more preferably 3 -100. The ratio is for the gas composition ratio at the inlet of the reaction furnace. For instance, when as one of carbon sources toluene is used, in consideration of the matter that 100% of the toluene decomposes into methane and benzene in proportions of 1:1 in the reaction furnace, only a deficiency of methane may be supplied separately. For example, in the case of adjusting the methane / benzene molar ratio to 3, 2 mol methane may be added to 1 mol toluene. As the methane to be added to the toluene, it is possible to use the methane which is contained as an unreacted form in the exhaust gas discharged from the reaction furnace, as well as a freshmethane specially supplied.

Using the composition ratio within such a range, it is possible to obtain the carbon fibrous structure in which both the carbon fiber parts and granular parts are efficiently developed.

Inert gases such as argon, helium, xenon; and hydrogen may be used as an atmosphere gas.

A mixture of transition metal such as iron, cobalt, molybdenum, or transition metal compounds such as ferrocene, metal acetate; and sulfur or a sulfur compound such as thiophene, ferric sulfide; may be used as a catalyst.

The intermediate may be synthesized using a CVD process with hydrocarbon or etc., which has been conventionally used in the art. The steps may comprise gasifying a mixture of hydrocarbon and a catalyst as a raw material, supplying the gasified mixture into a reaction furnace along with a carrier gas such as hydrogen gas, etc., and undergoing thermal decomposition at a temperature in the range of 800 °C - 1300 °C. By following such synthesis procedures, the product obtained is an aggregate, which is of several to several tens of centimeters in size and which is composed of plural carbon fibrous structures (intermediates), each of which has a three dimensional configuration where fibers having 15 - 100 nm in outside diameter are bound together by a granular part that has grown around the catalyst particle as the nucleus.

The thermal decomposition reaction of the hydrocarbon raw material mainly occurs on the surface of the catalyst particles or on growing surface of granular parts that have grown around the catalyst particles as the nucleus, and the fibrous growth of carbon may be achieved when the recrystallization of the carbons generated by the decomposition progresses in a constant direction. When obtaining carbon fibrous structures according to the present invention, however, the balance between the thermal decomposition rate and the carbon fiber growth rate is intentionally varied. Namely, for instance, as mentioned above, to use as carbon sources at least two kinds of carbon compounds having different decomposition temperatures may allow the carbonaceous material to grow three dimensionally around the granular part as a centre, rather than in one dimensional direction. The three dimensional growth of the carbon fibers depends not only on the balance between the thermal decomposition rate and the growing rate, but also on the selectivity of the crystal face of the catalyst particle, residence time in the reaction furnace, temperature distribution in the furnace, etc. The balance between the decomposition rate and the growing rate is affected not only by the kinds of carbon sources mentioned above, but also by reaction temperatures, and gas temperatures, etc. Generally, when the growing rate is faster than the decomposition rate, the carbon material tends to grow into fibers, whereas when the thermal decomposition rate is faster than the growing rate, the carbon material tends to grow in peripheral directions of the catalyst particle. Accordingly, by changing the balance between the thermal decomposition rate and the growing rate intentionally, it is possible to control the growth of carbon material to occur in multi-direction rather than in single direction, and to produce three dimensional structures that are related to the present invention. In order to form the above mentioned three-dimensional configuration, where the fibers are bound together by a granular part, with ease, it is desirable to optimize the compositions such as the catalyst used, the residence time in the reaction furnace, the reaction temperature and the gas temperature.

With respect to the method for preparing the carbon fibrous structure to be used in the present invention with efficiency, as another approach to the aforementioned one that two or more carbon compounds which have mutually different decomposition temperature are used in an appropriate mixing ratio, there is an approach that the raw material gas supplied into the reaction furnace from a supply port is forced to form a turbulent flow in proximity to the supply port. The "turbulent flow" used herein means a furiously irregular flow, such as flow with vortexes.

In the reaction furnace, immediately after the raw material gas is supplied into the reaction furnace from the supply port, metal catalyst fine particles are produced by the decomposition of the transition metal compound as the catalyst involved in the raw material gas. The production of the fine particles is carried out through the following steps. Namely, at first, the transition metal compound is decomposed to make metal atoms, then, plural number of, for example, about one hundred of metal atoms come into collisions with each other to create a cluster. At the created cluster state, it can not function as a catalyst for the fine carbon fiber. Then, the clusters further are aggregated by collisions with each other to grow into a metal crystalline particle of about 3 - 10 nm in size, and which particle comes into use as the metal catalyst fine particle for producing the fine carbon fiber.

During the catalyst formation process as mentioned above, if the vortex flows belonging to the furiously turbulent flow are present, it is possible that the collisions of metal atoms or collisions of clusters become more vigorously as compared with the collisions only due to the Brownian movement of atoms or collisions, and thus the collision frequency per unit time is enhanced so that the metal catalyst fine particles are produced within a shorter time and with higher efficiency. Further, since concentration, temperature, etc. are homogenized by the force of vortex flow, the obtained metal catalyst fine particles become uniform in size. Additionally, during the process of producing metal catalyst fine particles, a metal catalyst particles' aggregate in which numerous metal crystalline particles was aggregated by vigorous collisions with the force of vortex flows can be also formed. Since the metal catalyst particles are rapidly produced as mentioned above, the decomposition of carbon compound can be accelerated so that an ample amount of carbonaceous material can be provided. Whereby, the fine carbon fibers grow up in a radial pattern by taking individual metal catalyst particles in the aggregate as nuclei. When the thermal decomposition rate of a part of carbon compounds is faster than the growing rate of the carbon material as previously described, the carbon material may also grow in the circumferential direction so as to form the granular part around the aggregate, and thus the carbon fiber structure of the desired three dimensional configuration may be obtained with efficiency. Incidentally, it may be also considered that there is a possibility that some of the metal catalyst fine particles in the aggregate are ones that have a lower activity than the other particles or ones that are deactivated on the reaction. If non-fibrous or very short fibrous carbon material layers grown by such catalyst fine particles before or after the catalyst fine particles aggregate are present at the circumferential area of the aggregate, the granular part of the carbon fiber structure to be used in the present invention may be formed.

The concrete means for creating the turbulence to the raw material gas flow near the supply port for the raw material gas is not particularly limited. For example, it is adaptable to provide some type of collision member at a position where the raw material gas flow introduced from the supply port can be interfered by the collision section. The shape of the collision section is not particularly limited, as far as an adequate turbulent flow can be formed in the reaction furnace by the vortex flow which is created at the collision section as the starting point. For example, embodiments where various shapes of baffles, paddles, tapered tubes, umbrella shaped elements, etc., are used singly or in varying combinations and located at one or more positions may be adaptable.

The intermediate, obtained by heating the mixture of the catalyst and hydrocarbon at a constant temperature in the range of 800 °C - 1300°C, has a structure that resembles sheets of carbon atoms laminated together, (and being still in a half-raw, or incomplete condition). When analyzed with Raman spectroscopy, the D band of the intermediate is very large and many defects are observed. Further, the obtained intermediate is associated with unreacted raw materials, nonfibrous carbon, tar moiety, and catalyst metal.

Therefore, the intermediate is subjected to a high temperature heat treatment at 2400 - 3000 °C using a proper method in order to remove such residues from the intermediate and to produce the intended carbon fibrous structure with few defects.

For instance, the intermediate may be heated at 800 - 1200 °C to remove the unreacted raw material and volatile flux such as the tar moiety, and thereafter annealed at a high temperature of 2400 - 3000 °C to produce the intended structure and, concurrently, to vaporize the catalyst metal, which is included in the fibers, to remove it from the fibers. In this process, it is possible to add a small amount of a reducing gas and carbon monoxide into the inert gas atmosphere to protect the carbon structures.

By annealing the intermediate at a temperature of 2400 - 3000 °C, the patch-like sheets of carbon atoms are rearranged to associate mutually and then form multiple graphene sheet-like layers.

After or before such a high temperature heat treatment, the aggregates may be subjected to crushing in order to obtain carbon fibrous structures, each having an area-based circle-equivalent mean diameter of several centimeters. Then, the obtained carbon fibrous structures may be subjected to pulverization in order to obtain the carbon fibrous structures having an area-based circle-equivalent mean diameter of 50 - 100 μm. It is also possible to perform the pulverization directly without crushing. On the other hand, the initial aggregates involving plural carbon fibrous structures to be used in the present invention may also be granulated for adjusting shape, size, or bulk density to one' s suitable for using a particular application. More preferably, in order to utilize effectively the above structure formed from the reaction, the annealing would be performed in a state such that the bulk density is low (the state that the fibers are extended as much as they can and the voidage is sufficiently large). Such a state may contribute to improved electric conductivity of a polymer.

The carbon fibrous structures used in the present invention may have the following properties:

A) a low bulk density;
B) a good dispersibility in a matrix such as resin;
C) a high electrical conductivity;
D) a high heat conductivity;
E) a good slidability;
F) a good chemical stability;
G) a high thermal stability; and etc.

Thus, it is possible to prepare the colored polymer composition according to the present invention with taking these advantages.

The colored polymer composition according to the present invention includes the aforementioned carbon fibrous structures at an effective amount in the aforementioned matrix.

Although the amount depends on the intended usage of the colored polymer composition and the kind of polymer used, it is generally in the range of about 0.01 to about 3.0% by weight of total weight of the composition. When the amount is less than 0.01% by weight, the reinforcement in the mechanical strength may be less effective and electric conductivity may be also in an insufficient level. On the other hand, when the proportion is more than 3.0% by weight, mechanical strength may decline and adhesion of the composition as paint or adhesives may also become worse. In the colored polymer composition according to the present invention, fine carbon fibers of the carbon fibrous structures can distribute themselves uniformly throughout the matrix even when the carbon fibrous structures are added at a relative small amount. Thus, the carbon fibrous structures exert little influence on the color of the polymer. Therefore, by adding carbon fibrous structures to the organic polymer, as described above, colored polymer composition which is useful as a functional material having good electrical conductivity, radio wave shielding ability, heat conductivity, etc., or a structural material having high strength can be obtained.

<u>\<Coloring Agent\></u>

Next, as the coloring agent used in the colored polymer composition according to the present invention, it is possible to use various color and various kind of inorganic and organic pigments and dyes, singly or in form of any combination thereof. Among them, inorganic pigments are preferable.

As the white pigment, for instance, titanium oxide, zinc oxide (zinc white), calcium carbonate, antimony white, zinc sulfate, etc; as the extender pigment, for instance, baryte powder, barium carbonate, clay, silica, white carbon, talc, alumina white, etc; as the black pigment, for instance, carbon black, copper oxide, manganese dioxide, aniline black, etc.; are exemplified, respectively. Further, with respect to the chromatic colors, as the yellow pigment, for instance, chrome yellow, zinc yellow, cadmium yellow, yellow iron oxide, mineral fast yellow, nickel titanium yellow, quinoline yellow lake, permanent yellow NCG, navel yellow, naphthol yellow S, Hansa yellow G, benzidine yellow G, etc; as the orange pigments, red chrome yellow, for instance, molybdenum orange, permanent orange GTR, pyrazolone orange, vulcan orange, benzidine orange, etc; as the red pigments, for instance, red iron oxide, cadmium red, red lead, permanent red, lithol red, pyrazolone red, brilliant carmin 6B, rhodamine lake B, alizarin lake, etc.; as the violet pigment, for instance, manganese violet, fast violet, methyl violet lake, etc.; as the blue pigment, for instance, Milori blue, cobalt blue, alkaline blue lake, victoria blue lake, phthalocyanine blue, nonmetal phthalocyanine blue, fast sky blue, etc.; as the green pigment, for instance, chrome green, chrome oxide, pigment green B, Malachite green, final yellow green G, etc.; are exemplified respectively.

Further, as the dye, for instance, nigrosine, methylene blue, rose bengal, quinoline yellow, ultramarine blue, etc., are exemplified.

The utilizable coloring agents are not particularly limited to above exemplified ones, as a matter of course.

The coloring agents may be used individually or in any combination of two or more of them as pleases, depending upon a prescribed color intended. When it is intended to correct darkness in color tone of the polymer, the darkness being due to the addition of the carbon fibrous structures, it is preferable to use a coloring agent of being high lightness, such as the white pigments above mentioned and some of the extender pigments above mentioned are preferable, particularly, the white pigments are more preferable.

Since the optimum content of the coloring agent is varied depending upon the kind and size of the coloring agents to be used, etc., the content of the coloring agent is not particularly limited. However, for instance, when the carbon fibrous structures are added at a rate of 0.01 - 3.0 % by weight based on the total weight of the polymer composition as mentioned above, it is preferable that the white coloring agent is added at a rate of 10 - 60 % by weight based on the total weight of the polymer composition.

Even though the polymer composition according to the present invention contains carbon fibers, it is possible to regulate the white lightness of the polymer composition can to be in the range of about 30 - 80, when an appropriate amount of the white coloring agent are added.

In addition, in an embodiment where the addition of a chromatic color's coloring agent is intended, it is preferable to use a white coloring agent in conjunction with the chromatic color's coloring agent, in view of obtaining a hue with a good lightness.

Incidentally, with respect to the colored polymer composition, the properties of the matrix, involving electrical conductivity, mechanical strength, thermal stability, etc., are dramatically improved by adding the above mentioned carbon fibrous structures. Therefore, as for the coloring agent to be added in conjunction with the carbon fibrous structures, there is no need to satisfy a certain extra condition such that the coloring agent used is of having electrical conductivity, or such that electrical conductivity is ensured by additionally applying a transparent conductive film such as ITO, AZO, etc., onto the surface. Thus, as the coloring agent, any generic coloring agent can be used. As a matter of course, such electrically conductive coloring agents are also usable in the polymer composition of the present invention.

The colored polymer composition of the present invention may contain various known additives other than the carbon fibrous structures and the coloring agents, such as bulking agents, reinforcing agents, various stabilizers, antioxidants, ultraviolet rays absorbents, flame retardants, lubricants, plasticizers, solvents, etc., within the range where the primary objective of the present invention is not obstructed.

A molded article which is formed by molding the colored polymer composition according to the present invention can typically show a surface resistivity of not more than $10^{13}$ $\Omega$/cm$^2$, more preferably, $10^2$ - $10^{12}$ $\Omega$/cm$^2$, although the surface resistivity of the molded article is not particularly limited thereto.

The following are examples of applications of colored polymer composition according to the present invention, illustrated by functions of the carbon fibrous structures added in the composition. However, these examples are not intended to set a limit to the applications.

1) One which utilizes electrical conductivity

The carbon fibrous structures may be mixed with a resin to produce a conductive resin or conductive resin molded body, which may be used as wrapping material, gasket, container, resistance body, conductive fiber, electrical wire, adhesive, ink, paint, etc. In addition to resin composites, similar effects can be expected with a composite material that results from adding the carbon fibrous structures to an inorganic material, such as ceramic, metal, etc.

2) One which utilizes heat conductivity

In order to improve heat conduction, the carbon fibrous structures may be added to fuel as well as a matrix material similar to the above-described applications based on electrical conductivity.

3) One which utilizes electromagnetic wave shielding ability

The carbon fibrous structures may be mixed with a resin and used as electromagnetic wave shielding materials, in the form of paints or other molded shapes.

4) One which utilizes unique physical characteristics

The carbon fibrous structures may be mixed with a matrix, such as a resin or metal, to improve slidability of the matrix. Such materials may be used in, for example, rollers, brake parts, tires, bearings, lubricating oil, cogwheel, pantograph, etc.
Also, due to its light-weight and toughness characteristic, the composition can also be used in wires, bodies of consumer electronics or cars or airplanes, housings of machines, etc.
Additionally, it is possible to use these carbon fibrous structures as substitutes for conventional carbon fibers or beads, and thus the composition may be used for a terminal or poles of a battery, switch, vibration damper, etc.

5) One which utilizes a filler characteristic

The carbon fibers in the carbon fibrous structures have excellent strength, and moderate flexibility and elasticity. Thus, they may be advantageously used as fillers in various materials, for example, to form a network structure. Based on these characteristics, it is possible to use the composition, for example, to strengthen the terminals of power devices such as a lithium ion rechargeable battery or a lead-acid battery, a capacitor, and a fuel cell, and to improve cycle characteristics of these power devices.

**EXAMPLES**

Hereinafter, this invention will be illustrated in detail by practical examples. However, the invention is not limited to the following examples.
The respective physical properties illustrated later are measured by the following protocols.

<Area based circle-equivalent mean diameter>

First, a photograph of pulverized product was taken with SEM. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views. Contours of the individual carbon fibrous structures were traced using the image analysis software, WinRoof ™ (trade name, marketed by Mitani Corp.), and area within each individual contour was measured, circle-equivalent mean diameter of each individual carbon fibrous structure was calculated, and then, the calculated data were averaged to determine the area based circle-equivalent mean diameter.

<Measurement of Bulk density>

1 g of powder was placed into a 70 mm caliber transparent cylinder equipped with a distribution plate, then air supply at 0.1 Mpa of pressure, and 1.3 liter in capacity was applied from the lower side of the distribution plate in order to blow off the powder and thereafter allowed the powder to settle naturally. After the fifth air blowing, the height of the settled powder layer was measured. Any 6 points were adopted as the measuring points, and the average of the 6 points was calculated in order to determine the bulk density.

<Raman spectroscopic analysis>

The Raman spectroscopic analysis was performed with the equipment LabRam 800 manufactured by HORIBA JOBIN YVON, S.A.S., and using 514 nm the argon laser.

<TG combustion temperature>

Combustion behavior was determined using TG-DTA manufactured by MAC SCIENCE CO. LTD., at air flow rate of 0.1 liter/minute and heating rate of 10 °C/minute. When burning, TG indicates a quantity reduction and DTA indicates an exothermic peak. Thus, the top position of the exothermic peak was defined as the combustion initiation temperature.

<X ray diffraction>

Using the powder X ray diffraction equipment (JDX3532, manufactured by JEOL Ltd.), carbon fibrous structures after annealing processing were examined. Kα ray which was generated with Cu tube at 40 kV, 30 mA was used, and the measurement of the spacing was performed in accordance with the method defined by The Japan Society for the Promotion of Science (JSPS), described in "Latest Experimental Technique For Carbon Materials (Analysis Part)", Edited by Carbon Society of Japan, 2001), and as the internal standard silicon powder was used.

<Particle's resistance and decompressibility>

1 g of CNT powder was scaled, and then press-loaded into a resinous die (inner dimensions: 40 L, 10 W, 80 H (mm)), and the displacement and load were read out. A constant current was applied to the powder by the four-terminal method, and in this condition the voltage was measured. After measuring the voltage until the density come to 0.9g/cm$^3$, the applied pressure was released and the density after decompression was measured. Measurements taken when the powder was compressed to 0.5, 0.8 or 0.9 g/cm$^3$ were adopted as the particle's resistance.

<Mean diameter and roundness of the granular part, and ratio of the granular part to the fine carbon fiber>

First, a photograph of the carbon fibrous structures was taken with SEM in an analogous fashion as in the measurement of area based circle-equivalent mean diameter. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views.

On the carbon fibrous structures to be measured, assuming each individual granular part which is the binding point of carbon fibers to be a particle, contours of the individual granular parts were traced using the image analysis software, WinRoof ™ (trade name, marketed by Mitani Corp.), and area within each individual contour was measured, circle-equivalent mean diameter of each individual granular part was calculated, and then, the calculated data were averaged to determine the area based circle-equivalent mean diameter. Roundness (R) was determined by inputting value of the area(A) within each individual contour computed by the above and a measured value of each individual contour's length (L) to the following equation to calculate the roundness of each individual granular part, and then, averaging the calculated data.

$$[\text{Numerical Formula 1}]$$

$$R = A * 4\pi / L^2$$

Further, the outer diameter of the fine carbon fibers in the individual carbon fibrous structures to be measured were determined, and then, from the outer diameter determined and the circle-equivalent mean diameter of the granular part calculated as above, the ratio of circle-equivalent mean diameter to the outer diameter of the fine carbon fiber was calculated for each individual carbon fibrous structure, and then the data obtained are averaged.

<Mean distance between granular parts>

First, a photograph of the carbon fibrous structures was taken with SEM in an analogous fashion as in the measurement of area based circle-equivalent mean diameter. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views.

On the carbon fibrous structures to be measured, all places where the granular parts were mutually linked with a fine carbon fiber were found out. Then, at the respective places, the distance between the adjacent granular parts which were mutually linked with the fine carbon fiber (the length of the fine carbon fiber including the center of a granular part at one end to the center of another granular part at another end) was measured, and then the data obtained were averaged.

<Destruction test for carbon fibrous structure>

To 100ml of toluene in a lidded vial, the carbon fiber structures were added at a rate of 30 μg/ml in order to prepare the dispersion liquid sample of the carbon fibrous structure.

To the dispersion liquid sample of the carbon fibrous structure thus prepared, Ultrasound was applied using a ultrasonic cleaner (manufactured by SND Co., Ltd., Trade Name: USK-3) of which generated frequency was 38 kHz and power was 150 w, and the change of the carbon fibrous structure in the dispersion liquid was observed in the course of time aging.

First, 30 minutes after the application of ultrasound was started, a 2 ml constant volume aliquot of the dispersion sample was pipetted, and the photo of the carbon fibrous structures in the aliquot was taken with SEM. On the obtained SEM photo, 200 pieces of fine carbon fibers in the carbon fibrous structures (fine carbon fibers at least one end of which is linked to the granular part) were selected randomly, then the length of the each individual selected fine carbon fibers was measured, and mean length $D_{50}$ was calculated. The mean length calculated is taken as the initial average fiber length.

Meanwhile, on the obtained SEM photo, 200 pieces of granular parts which each were the binding point of carbon fibers in the carbon fibrous structures were selected randomly. Assuming each individual selected granular part to be a particle, contours of the individual granular parts were traced using the image analysis software, WinRoof™ (trade name, marketed by Mitani Corp.), and area within each individual contour was measured, circle-equivalent mean diameter of each individual granular part was calculated, and then, $D_{50}$ mean value thereof is calculated. The $D_{50}$ mean value calculated was taken as the initial average diameter of the granular parts.

Thereafter, according to the same procedure, a 2 ml constant volume aliquot of the dispersion sample was pipetted every constant periods, and the photo of the carbon fibrous structures in the each individual aliquot was taken with SEM, and the mean length $D_{50}$ of the fine carbon fibers in the carbon fibrous structure and the mean diameter $D_{50}$ of the granular part in the carbon fibrous structure were calculated individually.

At the time when the mean length $D_{50}$ of the fine carbon fibers comes to be about half the initial average fiber length (in the following Examples, 500 minutes after the application of ultrasound is stated.), the mean diameter $D_{50}$ of the granular part was compared with the initial average diameter of the granular parts in order to obtain the rate of variability (%) thereof.

<Electrical Conductivity>

Using a 4-pin probe type low resistivity meter (LORESTA-GP, manufactured by Mitsubishi Chemical), the resistance ($\Omega$) at nine points of a coated film surface was measured. Then, the measured values are converted into surface resistivity ($\Omega/cm^2$) by the resistivity meter, and an average was calculated.

<White Lightness>

The Lightness (L value) of white was measured in accordance with protocols in Japanese Industrial Standards JIS Z 8722.

Synthetic Example 1

By the CVD process, carbon fibrous structures were synthesized from toluene as the raw material.

The synthesis was carried out in the presence of a mixture of ferrocene and thiophene as the catalyst, and under the reducing atmosphere of hydrogen gas. Toluene and the catalyst were heated to 380 °C along with the hydrogen gas, and then they were supplied to the generation furnace, and underwent thermal decomposition at 1250 °C in order to obtain the carbon fibrous structures (first intermediate).

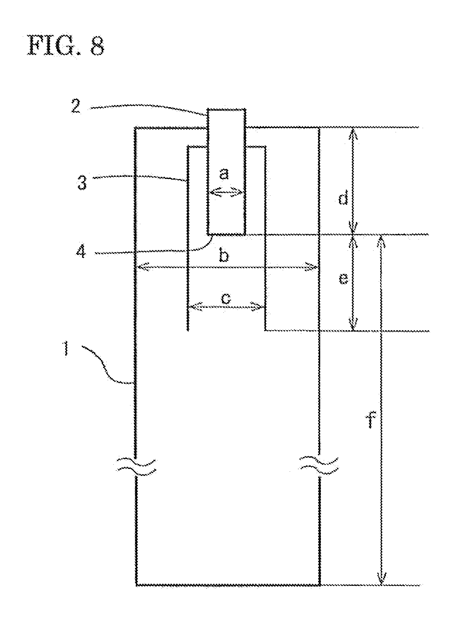

The generation furnace used for the carbon fibrous structures (first intermediate) is illustrated schematically in Fig. 8. As shown in Fig. 8, the generation furnace 1 was equipped at the upper part thereof with a inlet nozzle 2 for introducing the raw material mixture gas comprising toluene, catalyst and hydrogen gas as aforementioned into the generation furnace 1. Further, at the outside of the inlet nozzle 2, a cylindrical-shaped collision member 3 was provided. The collision member 3 was set to be able to interfere in the raw material gas flow introduced from the raw material supply port 4 located at the lower end of the inlet nozzle 2. In the generation furnace 1 used in this Example, given that the inner diameter of the inlet nozzle 2, the inner diameter of the generation furnace 1, the inner diameter of the cylindrical-shaped collision member 3, the distance from the upper end of the generation furnace 1 to the raw material mixture gas supply port 4, the distance from the raw material mixture gas supply port 4 to the lower end of the collision member 3, and the distance from the raw material mixture gas supply port 4 to the lower end of the generation furnace 1 were "a", "b", "c", "d", "e", and"f", respectively, the ratio among the above dimensions was set as a:b:c:d:e:f = 1.0:3.6:1.8:3.2:2.0: 21.0. The raw material gas supplying rate to the generation furnace was 1850 NL/min., and the pressure was 1.03 atms.

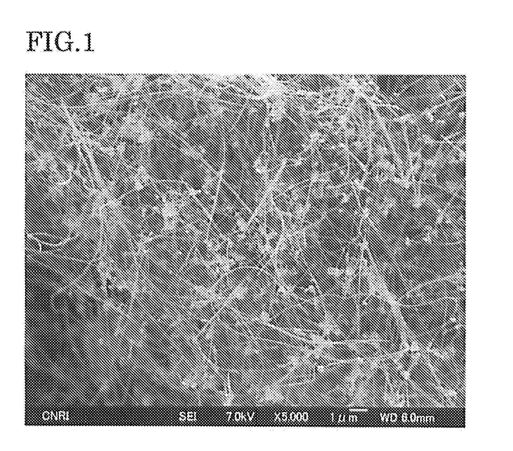

The synthesized first intermediate was baked at 900 °C in nitrogen gas in order to remove hydrocarbons such as tar and to obtain a second intermediate. The R value of the second intermediate measured by the Raman spectroscopic analysis was found to be 0.98. Sample for electron microscopes was prepared by dispersing the first intermediate into toluene. Figs. 1 and 2 show SEM photo and TEM photo of the sample, respectively.

Further, the second intermediate underwent a high temperature heat treatment at 2600 °C. The obtained aggregates of the carbon fibrous structures underwent pulverization using an air flow pulverizer in order to produce the carbon fibrous structures to be used in the present invention.

A sample for electron microscopes was prepared by dispersing ultrasonically the obtained carbon fibrous structures into toluene. Fig. 3, and Figs. 4A and 4B show SEM photo and TEM photos of the sample, respectively.

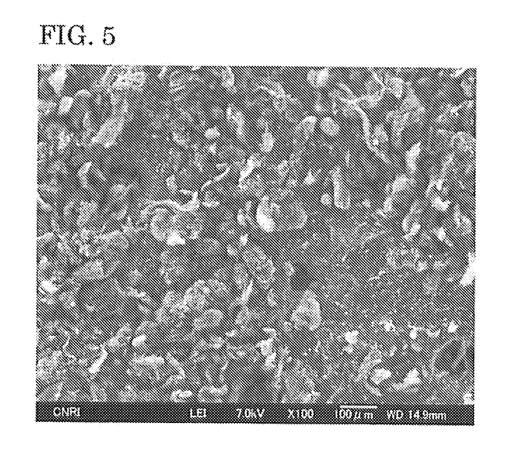

Fig. 5 shows SEM photo of the obtained carbon fibrous structures as mounted on a sample holder for electron microscope, and Table 1 shows the particle distribution of obtained carbon fibrous structures.

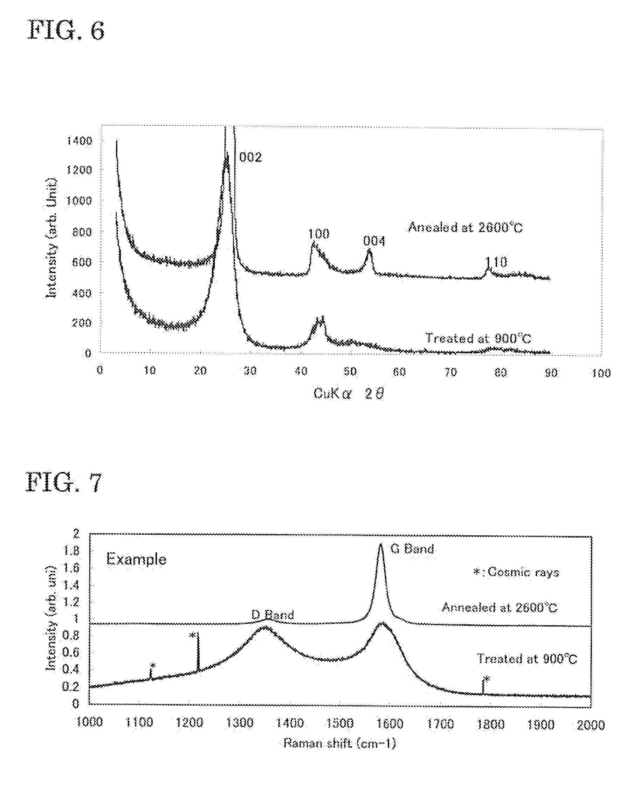

Further, X-ray diffraction analysis and Raman spectroscopic analysis were performed on the carbon fibrous structure before and after the high temperature heat treatment in order to examine changes in these analyses. The results are shown in Figs. 6 and 7, respectively.

Additionally, it was found that the carbon fibrous structures had an area based circle-equivalent mean diameter of 72.8 $\mu$m, bulk density of 0.0032 g/cm$^3$, Raman $I_D/I_G$ ratio of 0.090, TG combustion temperature of 786 °C, spacing of 3.383 angstroms, particle's resistance of 0.0083 $\Omega \cdot$cm, and density after decompression of 0.25 g/cm$^3$.

The mean diameter of the granular parts in the carbon fibrous structures was determined as 443 nm (SD 207 nm), that is 7.38 times larger than the outer diameter of the carbon fibers in the carbon fibrous structure. The mean roundness of the granular parts was 0.67 (SD 0.14).

Further, when the destruction test for carbon fibrous structure was performed according to the above mentioned procedure, the initial average fiber length ($D_{50}$) determined 30 minutes after the application of ultrasound was started was found to be 12.8 $\mu$m, while the mean length $D_{50}$ determined 500 minutes after the application of ultrasound was started was found to be 6.7 $\mu$m, which value was about half the initial value. This result showed that many breakages were given in the fine carbon fibers of the carbon fibrous structure. Whereas the variability (decreasing) rate for the diameter of granular part was only 4.8%, when the mean diameter ($D_{50}$) of the granular part determined 500 minutes after the application of ultrasound was started was compared with the initial average diameter ($D_{50}$) of the granular parts determined 30 minutes after the application of ultrasound was started. Considering measurement error, etc., it was found that the granular parts themselves were hardly destroyed even under the load condition that many breakages were given in the fine carbon fibers, and the granular parts still function as the binding site for the fibers mutually.

Table 2 provides a summary of the various physical properties as determined in Synthetic Example 1.

[Table 1]

| Particle Distribution (pieces) | Synthetic Example 1 |
|---|---|
| <50 $\mu$m | 49 |
| 50 $\mu$m to <60 $\mu$m | 41 |
| 60 $\mu$m to <70 $\mu$m | 34 |
| 70 $\mu$m to <80 $\mu$m | 32 |
| 80 $\mu$m to <90 $\mu$m | 16 |
| 90 $\mu$m to <100 $\mu$m | 12 |
| 100 $\mu$m to <110 $\mu$m | 7 |
| >110 $\mu$m | 16 |
| Area based circle-equivalent mean diameter | 72.8 $\mu$m |

[Table 2]

| | Synthetic Example 1 |
|---|---|
| Area based circle-equivalent mean diameter | 72.8 $\mu$m |
| Bulk density | 0.0032g/cm$^3$ |
| $I_D/I_G$ ratio | 0.090 |
| TG combustion temperature | 786 °C |

(continued)

|  | Synthetic Example 1 |
| --- | --- |
| Spacing for (002) faces | 3.383Å |
| Particle's resistance at 0.5 g/cm$^3$ | 0.0173Ω·cm |
| Particle's resistance at 0.8 g/cm$^3$ | 0.0096Ω·cm |
| Particle's resistance at 0.9 g/cm$^3$ | 0.0083Ω·cm |
| Density after decompression | 0.25g/cm$^3$ |

Synthetic Example 2

By the CVD process, carbon fibrous structures were synthesized using a part of the exhaust gas from the generation furnace as a recycling gas in order to use as the carbon source the carbon compounds such as methane, etc., included in the recycling gas, as well as a fresh toluene.

The synthesis was carried out in the presence of a mixture of ferrocene and thiophene as the catalyst, and under the reducing atmosphere of hydrogen gas. Toluene and the catalyst as a fresh raw material were heated to 380 °C along with the hydrogen gas in a preheat furnace, while a part of the exhaust gas taken out from the lower end of the generation furnace was used as a recycling gas. After it was adjusted to 380 °C, it was mixed with the fresh raw material gas on the way of the supplying line for the fresh raw material to the generation furnace. The mixed gas was then supplied to the generation furnace.

The composition ratio in the recycling gas used were found to be $CH_4$ 7.5%, $C_6H_6$ 0.3%, $C_2H_2$ 0.7%, $C_2H_6$ 0.1%, CO 0.3%, $N_2$ 3.5%, and $H_2$ 87.6% by the volume based molar ratio. The mixing flow rate was adjusted so that the mixing molar ratio of methane and benzene in the raw material gas to be supplied to the generation furnace, $CH_4/C_6H_6$ was set to 3.44 (wherein, it was considered that the toluene in the fresh raw material gas had been decomposed at 100% to $CH_4$:$C_6H_6$ = 1:1 by the heating in the preheat furnace.

In the final raw material gas, $C_2H_2$ , $C_2H_6$, and CO which were involved in the recycling gas to be mixed were naturally included. However, since these ingredients were very small amount, they may substantially be ignored as the carbon source.

Then they were underwent thermal decomposition at 1250 °C in order to obtain the carbon fibrous structures (first intermediate) in an analogous fashion as Synthetic Example 1.

The constitution of the generation furnace used for the carbon fibrous structures (first intermediate) was the same as that shown in Fig.8, except that the cylindrical- shaped collision member 3 was omitted. The raw material gas supplying rate to the generation furnace was 1850 NL/min., and the pressure was 1.03 atms as in the case of Synthetic Example 1.

The synthesized first intermediate was baked at 900 °C in argon gas in order to remove hydrocarbons such as tar and to obtain a second intermediate. The R value of the second intermediate measured by the Raman spectroscopic analysis was found to be 0.83. Sample for electron microscopes was prepared by dispersing the first intermediate into toluene. SEM photo and TEM photo obtained for the sample are in much the same with those of Synthetic Example 1 shown in Figs. 1 and 2, respectively.

Further, the second intermediate underwent a high temperature heat treatment at 2600 °C in argon gas. The obtained aggregates of the carbon fibrous structures underwent pulverization using an air flow pulverizer in order to produce the carbon fibrous structures to be used in the present invention.

A sample for electron microscopes was prepared by dispersing ultrasonically the obtained carbon fibrous structures into toluene. SEM photo and TEM photos obtained for the sample are in much the same with those of Synthetic Example 1 shown in Fig. 3 and Figs.4A and 4B, respectively.

Separately, the obtained carbon fibrous structures were mounted on a sample holder for electron microscope, and observed for the particle distribution. The obtained results are shown in Table 3.

Further, X-ray diffraction analysis and Raman spectroscopic analysis were performed on the carbon fibrous structure before and after the high temperature heat treatment in order to examine changes in these analyses. The results are in much the same with those of Synthetic Example 1 shown in Figs. 6 and 7, respectively.

Additionally, it was found that the carbon fibrous structures had an area based circle-equivalent mean diameter of 75.8 μm, bulk density of 0.004 g/cm$^3$, Raman $I_D/I_G$ ratio of 0.086, TG combustion temperature of 807 °C, spacing of 3.386 angstroms, particle's resistance of 0.0077 Ω·cm, and density after decompression of 0.26 g/cm$^3$.

The mean diameter of the granular parts in the carbon fibrous structures was determined as 349.5 nm (SD 180.1 nm), that is 5. 8 times larger than the outer diameter of the carbon fibers in the carbon fibrous structure. The mean roundness of the granular parts was 0.69 (SD 0.15).

Further, when the destruction test for carbon fibrous structure was performed according to the above mentioned procedure, the initial average fiber length ($D_{50}$) determined 30 minutes after the application of ultrasound was started was found to be 12.4 $\mu$m, while the mean length $D_{50}$ determined 500 minutes after the application of ultrasound was started was found to be 6.3 $\mu$m, which value was about half the initial value. This result showed that many breakages were given in the fine carbon fibers of the carbon fibrous structure. Whereas the variability (decreasing) rate for the diameter of granular part was only 4.2%, when the mean diameter ($D_{50}$) of the granular part determined 500 minutes after the application of ultrasound was started was compared with the initial average diameter ($D_{50}$) of the granular parts determined 30 minutes after the application of ultrasound was started. Considering measurement error, etc., it was found that the granular parts themselves were hardly destroyed even under the load condition that many breakages were given in the fine carbon, and the granular parts still function as the binding site for the fibers mutually.

Table 4 provides a summary of the various physical properties as determined in Synthetic Example 2.

[Table 3]

| Particle Distribution (pieces) | Synthetic Example 2 |
|---|---|
| <50 $\mu$m | 48 |
| 50 $\mu$m to <60 $\mu$m | 39 |
| 60 $\mu$m to <70 $\mu$m | 33 |
| 70 $\mu$m to <80 $\mu$m | 30 |
| 80 $\mu$m to <90 $\mu$m | 12 |
| 90 $\mu$m to <100 $\mu$m | 15 |
| 100 $\mu$m to <110 $\mu$m | 3 |
| >110 $\mu$m | 18 |
| Area based circle-equivalent mean diameter | 75.8 $\mu$m |

[Table 4]

| | Synthetic Example 2 |
|---|---|
| Area based circle-equivalent mean diameter | 75.8 $\mu$m |
| Bulk density | 0.004g/cm$^3$ |
| $I_D/I_G$ ratio | 0.086 |
| TG combustion temperature | 807 °C |
| Spacing for (002) faces | 3.386 Å |
| Particle's resistance at 0.5 g/cm$^3$ | 0.0161Ω·cm |
| Particle's resistance at 0.8 g/cm$^3$ | 0.0089Ω·cm |
| Particle's resistance at 0.9 g/cm$^3$ | 0.0077Ω·cm |
| Density after decompression | 0.26g/cm$^3$ |

Examples 1

To 60 parts by weight of polypropylene (grade J10G, manufactured by Mitsui Chemicals, Inc.), 1.5 parts by weight of the carbon fibrous structures obtained in Synthetic Example 1, and 38.5 parts by weight of titanium white (manufactured by Mitsubishi Materials Corporation) were added, and then the resultant mixture was kneaded using a biaxial extruder.

Further, using thus obtained compound, a film of 100 $\mu$m in thickness was molded in extrusion and drawing. The obtained film was determined with respect to the surface resistivity and the white lightness. As results, it was found that the film had a surface conductivity of 1.2 x 10$^4$ Ω/cm$^2$, and a white lightness (L value) of 51. Further, on the surface of the obtained film no asperity was observed and thus the film showed excellent smoothness.

Example 2

The same procedure as in Example 1 was repeated except that carbon fibrous structures obtained in Synthetic Example 2 were used instead of the carbon fibrous structures obtained in Synthetic Example 1, and the obtained film underwent the same evaluation tests as in Example 1. As results, it was found that the film had a surface conductivity of 9.5 x 10$^3$ Q/cm$^2$, and a white lightness (L value) of 52.

**Claims**

1. Colored polymer composition which includes carbon fibrous structures and a coloring agent in a polymer matrix, wherein the carbon fibrous structure comprises a three dimensional network of carbon fibers each having an outside diameter of 15 - 100 nm, wherein the carbon fibrous structure further comprises a granular part with which the carbon fibers are tied together in the state that the concerned carbon fibers are externally elongated therefrom, and wherein the granular part is produced in a growth process of the carbon fibers.

2. The colored polymer composition according to Claim 1, wherein the coloring agent is a white coloring agent.

3. The colored polymer composition according to Claim 1, wherein as the coloring agent a white coloring agent and other color's coloring agent are contained.

4. The colored polymer composition according to one of Claims 1 - 3, wherein the carbon fibrous structures and the white coloring agent are contained at a rate of 0.01 - 3 % by weight, and at a rate of 10 - 60 % by weight, respectively, based on the total weight of the polymer composition.

5. The colored polymer composition according to one of Claims 1 - 4, wherein the carbon fibrous structures have an area-based circle-equivalent mean diameter of 50 - 100 μm.

6. The colored polymer composition according to one of Claims 1 - 5, wherein the carbon fibrous structures have a bulk density of 0.0001 - 0.05g/cm$^3$.

7. The colored polymer composition according to one of Claims 1-6, wherein the carbon fibrous structures have $I_D/I_G$ ratio determined by Raman spectroscopy of not more than 0.2.

8. The colored polymer composition according to one of Claims 1-7, wherein the carbon fibrous structures are produced using as carbon sources at least two carbon compounds which have mutually different decomposition temperatures.

FIG.1

FIG.2

FIG. 3

FIG. 4A

FIG. 4B

FIG. 5

FIG. 6

FIG. 7

FIG. 8

## INTERNATIONAL SEARCH REPORT

| | International application No. |
|---|---|
| | PCT/JP2006/321679 |

**A. CLASSIFICATION OF SUBJECT MATTER**
*C08L101/00*(2006.01)i, *C08K7/06*(2006.01)i, *D01F9/127*(2006.01)i

According to International Patent Classification (IPC) or to both national classification and IPC

**B. FIELDS SEARCHED**

Minimum documentation searched (classification system followed by classification symbols)
C08L1/00-101/16, D01F1/00-13/04

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2004-176244 A (Showa Denko Kabushiki Kaisha), 24 June, 2004 (24.06.04), Claims; Par. Nos. [0008], [0027] & WO 2004/044289 A1 | 1-8 |
| X | JP 2002-266170 A (Showa Denko Kabushiki Kaisha), 18 September, 2002 (18.09.02), Par. Nos. [0001], [0027], [0041] & US 2004/036060 A1 & EP 1343410 A1 & WO 2002/049412 A1 & AU 1950702 A & CA 2431727 A & CN 1481454 A | 1-8 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 December, 2006 (01.12.06) | 12 December, 2006 (12.12.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

## INTERNATIONAL SEARCH REPORT

International application No.

PCT/JP2006/321679

C (Continuation). DOCUMENTS CONSIDERED TO BE RELEVANT

| Category* | Citation of document, with indication, where appropriate, of the relevant passages | Relevant to claim No. |
|---|---|---|
| X | JP 2003-227039 A (Showa Denko Kabushiki Kaisha), 15 August, 2003 (15.08.03), Par. Nos. [0001], [0033] & WO 2003/040445 A1 & US 2004/258606 A1 & AU 2002343216 A1 | 1-8 |
| X | JP 2004-250280 A (Futaba Corp.), 09 September, 2004 (09.09.04), Claims; Par. Nos. [0006], [0037]; Fig. 6 & US 2004/160157 A1 | 1-8 |
| A | JP 2004-359936 A (Showa Denko Kabushiki Kaisha), 24 December, 2004 (24.12.04), Claims; Par. No. [0020] & WO 2004/101664 A2 & EP 1622971 A2 | 7 |
| P,A | WO 2006/025141 A1 (Bussan Nanotech Research Institute Inc.), 09 March, 2006 (09.03.06), Claims; Par. No. [0001] & US 2006/078730 A1 & JP 2006-183225 A & JP 2006-183227 A | 1-8 |
| P,X | WO 2006/100809 A1 (Bussan Nanotech Research Institute Inc.), 28 September, 2006 (28.09.06), Claims; Par. Nos. [0041], [0044], [0046], [0050], [0069] to [0072] & JP 2006-265315 A | 1-8 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6182480 B

**Non-patent literature cited in the description**

- Latest Experimental Technique For Carbon Materials (Analysis Part. The Japan Society for the Promotion of Science (JSPS. 2001